# EUROPÄISCHE PATENTSCHRIFT

(11) **EP 0 486 431 B1**
(45) Veröffentlichungstag und Bekanntmachung des Hinweises auf die Patenterteilung: **06.03.1996**
(21) Anmeldenummer: 91810873.9
(22) Anmeldetag: 13.11.1991
(51) Int. Cl.: B25H 3/04

(54) **Vorrichtung zum Aufhängen von Rädern oder Reifen**
Device for hanging wheels or tyres
Dispositif pour suspendre des roues ou pneus

(30) Priorität: 13.11.1990 CH 596/90
(43) Veröffentlichungstag der Anmeldung: 20.05.1992
(73) Patentinhaber: Wüthrich, Daniel, CH-3114 Wichtrach (CH)
(72) Erfinder: Wüthrich, Daniel, CH-3114 Wichtrach (CH)
(74) Vertreter: AMMANN PATENTANWAELTE AG BERN

(56) Entgegenhaltungen:
- CH-A- 595 957
- US-A- 1 471 157
- US-A- 4 308 733
- US-A- 4 410 117
- US-A- 4 751 833

## Beschreibung

Die Erfindung betrifft eine Vorrichtung zum Aufhängen von Rädern oder Reifen, gemäss Oberbegriff des Anspruchs 1.

Eine derartige Vorrichtung ist aus der CH-A-595 957 bekannt.

Die Einsatzmöglichkeiten von Vorrichtungen dieser Gattung sind vielfältig. So können sie z.B. in den Autowerkstätten, Verkauf- oder Ausstellungsräumen oder -plätzen von Fachgeschäften, aber auch in Privatgaragen Anwendung finden.

Das mit diesen Vorrichtungen verknüpfte Problem liegt in der Gewährleistung einer effizienten Sicherung, sowohl gegen Diebstahl als auch Unfall, wobei die Konstruktion einfach und die Herstellung kostengünstig bleiben und die Handhabung praktisch sein soll.

CH-A-595 957 beschreibt eine Vorrichtung, die aus einem Gehäuse, einem Bügel und einem Halter besteht. Die Reifen werden auf einen an einer Wand angebrachten zylindrischen Blechmantel des Gehäuses aufgeschoben. Wenigstens der äussere bzw. vordere Reifen ist mittels eines mit dem Blechmantel verbundenen Bügels gegen unbefugtes Wegnehmen gesichert. Ein um ein Scharnier klappbarer Frontdeckel schliesst den Blechmantel, sodass die Zugänglichkeit zu den Befestigungsschrauben des Gehäuses sowie zu den lösbaren Verbindungsstiften des Bügels mit dem Blechmantel nur durch Oeffnen dieses Deckels gegeben ist. Der zum Aufhängen von Felgen vorgesehene, mit einem Rohrstück versehene, Halter ist mit dem Bodenblech des Blechmantels verbunden und mit einer Schraube an der Wand befestigt. Das der Wand entgegengesetzte Rohrstückende ist mit einem Schloss versehen, sodass der oder die Felgen aus diesem Rohrstück nicht herausgenommen werden können. Der Hauptnachteil dieser Vorrichtung liegt in ihrer Unflexibilität, da sie für eine bestimmte feste Anzahl von Reifen und Felgen vorgesehen ist: Will der Besitzer beispielsweise eine Halterung, die mehr als drei Felgen aufnehmen kann, so ist es unumgänglich, erstens die ganze Vorrrichtung abzumontieren, und zweitens eine ganz neue Halterung, welche ein entsprechendes Rohrstück aufweist, mit dem Bodenblech des Blechmantels zu verbinden, und die Vorrichtung wieder an der Wand zu befestigen. Eine analoge Bemerkung gilt, wenn die Aufnahmekapazität der Reifen erhöht werden soll.

US-A-4,410,117 beschreibt eine am hinteren Teil eines Fahrzeuges montierte Ersatzradhalterung. Das Ersatzrad ist auf einer an einem Rahmen der Halterung angebrachten Welle befestigt. Diese Halterung ist mit der hinteren Stossstange, welche um eine horizontale Achse (A) schwenkbar ist, so verbunden, dass gleichzeitig sowohl die ebenfalls um eine von der Achse (A) versetzte, horizontale Achse klappbare, hintere Türe des Fahrzeuges als auch der genannte Rahmen, betätigt werden können. Diese Simultanbewegung des Rahmens und der Tür um deren jeweilige Rotationsachsen wird dank einer Platte (30) ermöglicht, welche schiebbar auf dem Rahmen montiert und auf dem oberen Teil der Tür befestigt ist. Die hier gestellte Aufgabe und die zur Lösung dafür eingesetzten Mittel und Funktionen dieser Mittel liegen auf einer ganz anderen Ebene, so dass die hier gewonnene Lehre zur Verbesserung der in CH-A-595 957 beschriebenen Halterung keinen Hinweis bringt.

Wie oben erwähnt, gilt es, eine gattungsgemäße Vorrichtung zum Aufhängen von Rädern oder Reifen zu schaffen, welche in der Herstellung wesentlich kostengünstiger ist als die Vorrichtung von der die Erfindung ausgeht (CH-A-595 957), und welche die oben aufgeführten Nachteile beseitigt.

Diese Aufgabe wird durch die Merkmale des Anspruchs 1 gelöst.

Besondere Bauweisen und Merkmale der erfindungsgemässen Vorrichtung sind in den abhängigen Ansprüchen definiert.

Die Erfindung wird nun im einzelnen anhand der beiliegenden Zeichnung von drei Ausführungsbeispielen näher erläutert.
- Fig. 1: zeigt eine Seitenansicht mit Teilschnitt, einer ersten Ausführungsform,
- Fig. 2: zeigt eine Perspektive einer zweiten Ausführungsform der Vorrichtung, und
- Fig. 3: zeigt eine Perspektive einer dritten Ausführungsform der Vorrichtung.

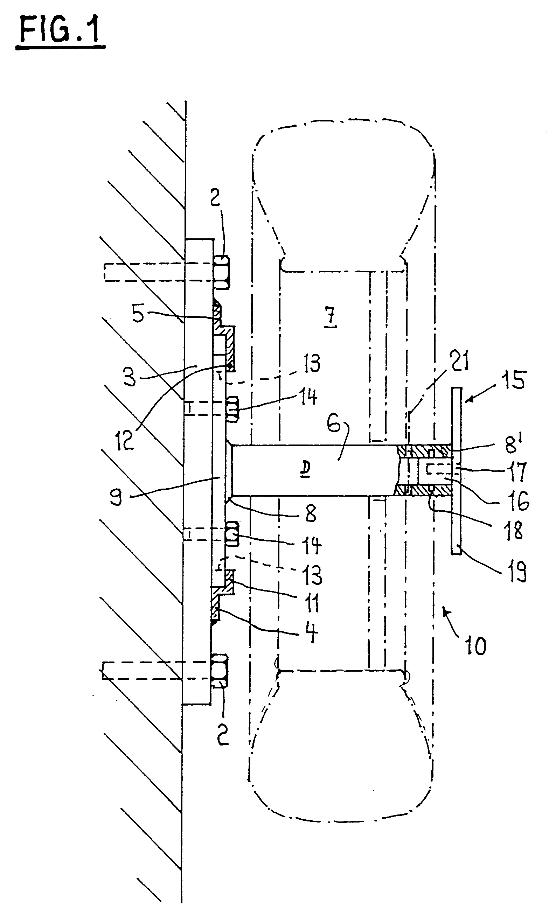

Die Fig. 1 zeigt eine Ausführungsform der erfindungsgemässen Vorrichtung 10 zum Aufhängen von Rädern oder Felgen. Die Vorrichtung 10 umfasst im wesentlichen eine an der Wand 1 mit Befestigungsmitteln 2 festgeschraubte Wandplatte 3, Halterungselemente 4, 5, eine Tragstange 6 mit Durchmesser D und eine Sicherungsvorrichtung 15.

Die Halterung der Tragstange kann beispielsweise wie folgt gewählt werden. Das eine Ende 8 der Tragstange ist mit einer Auflageplatte 9 verbunden. Die Elemente 4, 5 sind an der Wandplatte 3 verbunden, z.B. angeschweisst und bilden eine klammerartige Halterung, mit nach innen gerichteten Backen 11, 12, wobei die untere 11 kürzer ist als die obere 12, und die Weite des zwischen der Platte 3 und der Innenfläche der Backen 11, 12 entstehenden Raumes etwas grösser ist als die Dicke der Platte 9. Die Elemente 4, 5 sind also an der Platte 3 so angebracht, dass die Platte 9 der Tragstange 6 von vorne her in an sich bekannter Weise in die Halterung eingebracht werden kann, ohne dass Hilfswerkzeuge notwendig sind. Die Halterungen 4, 5 können mittels Seitenblechen geschlossen sein. Diese Seitenbleche sind lediglich durch die punktierten Linien 13 angedeutet. Um jegliches unbefugtes Herausnehmen der Tragstange samt daraufgehängten Rad 7 zu verhindern, sind vorzugsweise Sicherheitsschrauben 14 in die Platte 3 eingeschraubt. Diese Halterung erlaubt ein praktisches Auswechseln der Tragstangen, die in verschiedenen Längen und Durchmesser D ausführbar sind. Selbstverständlich besteht die Möglichkeit, andere an sich bekannten Befestigungsausführungsformen der Tragstange an die Mauer vorzusehen. So kann z.B. das Ende 8 der Tragstange mit einer Platte, die direkt an die Mauer 1 befestigt wird, verbunden sein.

Am anderen Endteil 8' der Tragstange 6 ist die Sicherungsvorrichtung angebracht. Diese umfasst beispielsweise ein in das Rohr einsteckbares Zylinderschloss 16 mit Schlüsselschlitz 17, und eine als Deckel 19 gestaltete Kappe. Ferner ist für die Verriegelung eine Nut 18 in das Rohrinnere eingefräst. Die Sicherungsvorrichtung kann selbstverständlich in verschiedenen, an sich bekannten Varianten ausgeführt werden. So könnte z.B. am Deckel und an der Tragstange ein mit je einem Loch versehenes angeschweisstes Flacheisen vorgesehen werden, so dass die Verriegelung durch ein in die erwähnten Löcher einzuhängende Bügelschloss erfolgen kann.

Die Tragstange 6 der Vorrichtung 10 ist, wie oben schon gesagt, in verschiedenen Längen ausführbar, so dass vorzugsweise ein, zwei oder vier Räder bzw. Felgen aufgehängt werden können. In einer anderen Ausführung ist vorgesehen, dass auf einen ersten Teil der Tragstange, d.h. ein Teil das mit einer Platte 9 versehen ist, wenigstens eine weitere, nicht dargestellte Tragstange aufsetzbar ist, wobei das eine Ende dieser weiteren Stange eingesteckt wird, und das andere Ende 8′ gemäss Fig. 1 ausgeführt ist oder wiederum als Aufnahme eines weiteren Teils dient.

Die weiteren Tragstangen werden dabei miteinander gegen Axial- und Drehbewegung durch ein lediglich als strichpunktierte Linie 21 symbolisiertes Mittel verbunden. Dieses Mittel besteht beispielsweise aus einem Stift mit Kopf, der durch an den zu koppelten Tragstangen vorzusehenden entsprechenden Bohrungen leicht, d.h. mit etwas Spiel einführbar ist. Die Länge des Stiftes und die Bohrung ist so zu bemessen, dass weder der Kopf noch das gegenüberliegende Ende des Stiftes aus der Tragstange herausragt.

Der Durchmesser D der Tragstange wird so gewählt, dass die meistüblichen Rädern aufgehängt werden können, kann aber auch für spezifische Räder bzw. Felgen abgestimmt werden.

Der Deckel 19 der Sicherungsvorrichtung 15 kann schliesslich ausser seiner Schliessfunktion beschriftet werden und somit zu Werbezwecken dienen.

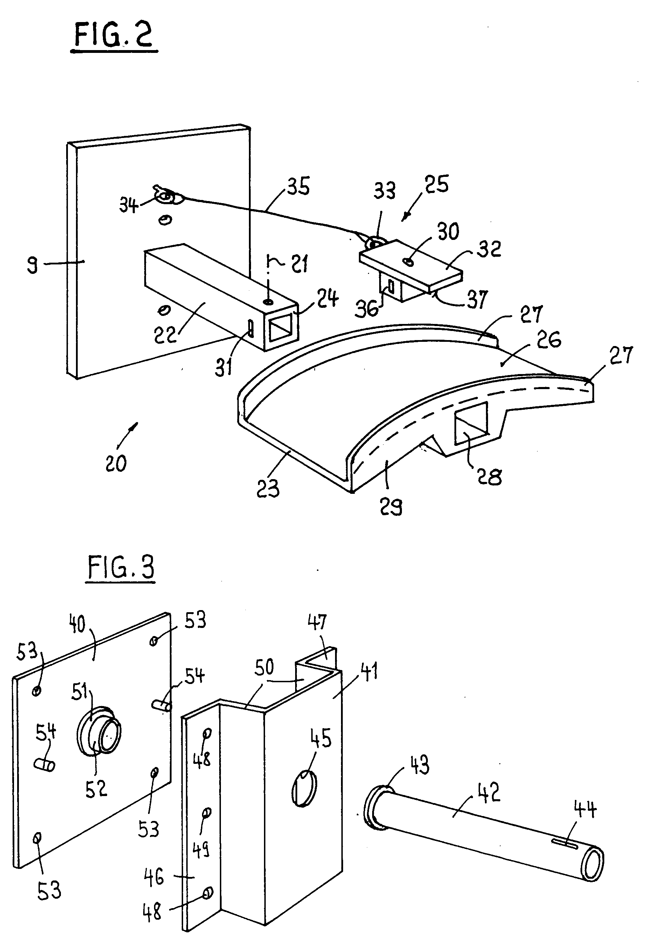

Fig. 2 zeigt eine Variante der erfindungsgemässen Vorrichtung, die zum Aufhängen von Reifen vorgesehen ist. Prinzip und Bauart dieser Variante sind den in Fig. 1 dargestellten ähnlich. Man beschränkt sich deswegen im folgenden nur auf in Fig. 1 nicht dargestellte Besonderheiten.

Der Querschnitt des die Tragstange 22 bildenden Rohrs ist hier polygonal, vorzugsweise quadratisch. Auf die Tragstange wird eine Auflage 23 aufgestülpt. Beim montierten Zustand fluchtet die vordere Front 29 der Auflage 23 mit dem vorderen Ende 24 der Tragstange 22.

Die in Fig. 2 gezeigte Auflage 23, vorzugsweise aus festem Kunststoff hergestellt, weist eine gekrümmt bzw. gewölbte Tragfläche 26, in der Mitte unten eine längliche, d.h. bezüglich der Tragfläche 26 axial verlaufende, dem äusseren Querprofil der Tragstange entsprechende Oeffnung 28, wodurch die Auflage 23 gegen ein Kippen nach links oder rechts gesichert ist sowie hinten und vorne nach oben gerichtete Ränder 27 auf. Das Profil der Tragfläche 26 kann z.B. kreisförmig oder elliptisch sein. Der Krümmungsradius bzw. die -radien sowie die Tiefe der Fläche 26 können spezifisch für bestimmte Reifenmasse abgestimmt sein oder so gewählt werden, dass die üblichsten Standardreifen aufgehängt werden können. Durch die Formgebung der Auflage 23 wird eine Deformation des aufgehängten Reifens verhindert.

Analog der Vorrichtung nach Fig. 1 kann die Tragstange in verschiedenen Teillängen ausgeführt werden, und/oder es kann einem ersten Teil mit Auflageplatte 9 wenigstens eine weitere Tragstange teleskopartig angehängt werden. Auch hier werden die Tragstangenteile gegen Axialverschiebung mit lediglich einem mit dem Referenzzeichen 21 angedeuteten Stift verbunden. Wenigstens eine Auflage 23 mit entsprechenden Massen wird/werden dann auf die so gebildete Tragstange aufgestülpt.

Die Sicherungsvorrichtung 25 umfasst hier ein Abschlussteil 36, 32, das mit der Platte 9 über ein Kabel 35, z.B. ein Stahlband, verbunden ist.

Das Abschlussteil besteht aus einem in das Rohr einsteckbaren Schloss 36, eine Kappe 32 mit Schlüsselloch 30, wobei die untere Fläche 37 dieser Kappe einen Anschlag gegen das Ende 24 der Tragstange 22 bildet, und eine Oese 33 mit der das eine Ende des Kabels 35 verbunden ist. Das andere Ende des Kabels ist an einer mit der Platte 9 verschraubten Oese 34 verbunden.

In der Nähe des Endes 24 der Tragstange ist ein Schlitz 31 für die Verriegelung vorgesehen. Bei geschlossenem Zustand reicht dann das Kabel 35 über das oder die auf der (den) Auflage(n) 23 aufgehängte(n) Reifen.

Der Rand 29 kann hier für Beschriftungen für Werbezwecke dienen. Für solche Beschriftungen kann aber auch ein nicht dargestellter, auf die Kappe 32 aufbringbarer Deckel oder Schild dienen.

In Fig. 3 ist eine weitere, besonders kostengünstige Ausführungsform dargestellt. Sie umfasst eine Wand- oder Auflageplatte 40, eine Abstützplatte 41 und eine Tragstange 42. Die rohrartige Tragstange mit Aussendurchmesser D weist am hinteren Endrand einen Anschlagring 43 auf und am vorderen Endteil einen Schlitz 44 zur Anbringung gung einer nicht dargestellten Sicherungsvorrichung, welche z.B. aus einem in den Schlitz 44 einsteckbaren und durch ein Schloss verriegelbaren Dorn besteht. Die im Horizontalschnitt hutförmige Abstützplatte 41 ist in ihrer Mitte mit einer Bohrung 45 mit Durchmesser D versehen. Beide Flügel 46, 47 weisen je in der Nähe des oberen und unteren Randes jeweils eine für den Durchgang einer nicht dargestellten Befestigungsschraube Bohrung 48, und in der Mitte eine Bohrung 49 auf. Die Wandplatte 40 weist in ihrer Mitte einen Anschlagssitz 51 und eine Stütze 52 auf, deren Innendurchmesser dem Aussendurchmesser D der Tragstange 42 entspricht. Die Gesamtlänge des Sitzes 51 und der Stütze 52 ist gleich gross oder kürzer als die Höhe der Schenkel 50 der Abstützplatte 41. In der Nähe des linken und rechten Randes der Wandplatte 40 sind je zwei Bohrungen 53, die denjenigen 48 der Abstützplatte 41 entsprechen, sowie einen der Bohrung 49 entsprechenden Zentrierstift 54 vorgesehen. Nachdem die vier den Bohrungen 48, 53 passenden Löcher in der Wand gebohrt wurden, wird bei der Montage vorerst die Tragstange 42 in die Stütze 52 der Wandplatte 40 von hinten eingeführt, sodass der Anschlagsring 43 gegen den Anschlagssitz 51 anschlägt, wobei dann die hintere Fläche der Platte 40 und der hintere Rand des Anschlagsringes 43 zu einer selben Ebene liegen kommen. Die Abstützplatte 41 wird über die Tragstange 42 durch die Bohrung 45 geführt, bis zum Anschlag der Flügel 46, 47 auf die Platte 40 und gleichzeitiges hineinpassen der Stifte 54 in die Bohrungen 49. Die gesamte Vorrichtung braucht dann nur noch mittels der vier Befestigungsschrauben an die Wand festgeschraubt zu werden.

Die Sicherungsvorrichtungen der erfindungsgemässen Vorrichtung zum Aufhängen von Rädern oder Reifen ist gegen jegliche unbefugte Handhabung gesichert. Darüber hinaus wird gleichzeitig das versehentliche Herunterfallen der aufgehängten Gegenstände verhindert, so dass Schäden, oder Verletzungen von Personen verhütet werden.

## Patentansprüche

1. Vorrichtung zum Aufhängen von Rädern oder Reifen, mit einer an einer Wand befestigten Platte (3) und einer an dieser Wandplatte angebrachten rohrförmigen Tragstange (6,22,42) zur Auflage wenigstens eines Rades und mit einer Diebstahl und Unfall verhindernden Sicherungsvorrichtung (15,25), **dadurch gekennzeichnet**, dass die Tragstange (6,22,42) zur wahlweisen Auflage wenigstens eines Rades oder zur Auflage wenigstens eines Reifens bestimmt ist, wozu wenigstens eine gewölbte Auflage (23) auf die Tragstange aufsetzbar ist und daran gegen ein Kippen gesichert ist, und dass die Wandplatte (3) eine mit ihr verbundene, aus einem unteren und aus einem oberen Halterungselement (4,5) bestehenden Halterung aufweist, dass das dieser Wandplatte zugewandte Endteil der Tragstange (6,22,42) eine Halteplatte (9,40) aufweist, welche mit der Halterung (4,5) mitwirkt und mit der Wandplatte (3) fest verbunden ist, dass das andere Endteil dieser Tragstange zur Aufnahme eines auf das Rohrende aufsteckbares und sicherbares Abschlussteils (16,36) der Sicherungsvorrichtung gestaltet ist, und dass dieses Abschlussteil eine als Deckel gestaltete Kappe (19,32) umfasst, wobei das genannte Rohrende und das Abschlussteil zur Verriegelung zusammenwirkende Mittel (18,31) aufweisen.

2. Vorrichtung nach Anspruch 1, dadurch gekennzeichnet, dass die Tragstange (6, 22, 42) ein verschiedene Längen aufweisendes Einzelteil bildet.

3. Vorrichtung nach Anspruch 1, dadurch gekennzeichnet, dass die Tragstange wenigstens zwei Teile (52, 42) aufweist, wobei das eine Ende (51) des ersten Teils (52) über die Halteplatte (40) mit der Halterung verbunden ist und das andere Ende mit dem einen Ende (43) des weiteren bzw. des letzten Teils (42) lösbar verbunden ist und das andere Ende (44) des weiteren bzw. des letzten Teils (42) zur Aufnahme eines Abschlussteils der Sicherungsvorrichtung (15, 25) vorgesehen ist.

4. Vorrichtung nach Anspruch 1, 2 oder 3, dadurch gekennzeichnet, dass die Kappe (32), mittels eines bügelbildenden Bandes (35) mit der Platte (9) der Tragstange fest verbindbar ist.

5. Vorrichtung nach einem der Ansprüche 1 bis 4, dadurch gekennzeichnet, dass die Tragstange (6,22) mit der Halteplatte (9) fest verbunden ist.

6. Vorrichtung nach einem der Ansprüche 1 bis 4, dadurch gekennzeichnet, dass die Tragstange (42) mit der Halteplatte (40) lose verbunden ist.

## Claims

1. Suspending device for wheels or tyres, comprising a plate (3) which is fastened to a wall, a tubular supporting bar (6, 22, 42) which is attached to said wall plate and intended to support at least one wheel, and a securing device (15, 25) for the prevention of theft or accidents, characterised in that said supporting bar (6, 22, 42) is intended alternatively to support at least one wheel or to support at least one tyre, for which purpose at least one curved rest (23) is capable of being placed on said supporting bar, where it is secured against tilting, and in that said wall plate (3) comprises a connected holding device consisting of an upper and a lower holding member (4, 5), in that the end portion of the supporting bar (6, 22, 42) facing said wall plate comprises a holding plate (9, 40) which cooperates with said holding device (4, 5) and is rigidly connected to said wall plate (3), in that the other end portion of said supporting bar is designed to receive a locking portion (16, 36) of the securing device which is capable of being slipped on the tube end and of being secured, and in that said locking portion includes a cap (19, 32) forming a cover, said tube end and said end portion comprising cooperating locking means (18, 31).

2. Device according to claim 1, characterised in that said supporting bar (6, 22, 42) is a single part having different lengths.

3. Device according to claim 1, characterised in that said supporting bar comprises at least two parts (52, 42), one end (51) of the first part (52) being connected to the holder by means of the holding plate (40) and the other end being detachably connected to one end (43) of the following or the last part (42), and the other end (44) of the following or the last part (42) being intended to receive a locking portion of said securing device (15, 25).

4. Device according to claim 1, 2, or 3, characterised in that said cap (32) is adapted to being fastenend to the plate (9) of said suuporting bar by means of a band forming loops (35).

5. Device according to any one of claims 1 to 4, characterised in that said supporting bar (6, 22) is rigidly connected to said holding plate (9).

6. Device according to any one of claims 1 to 4, characterised in that said supporting bar (42) is detachably connected to said holding plate (40).

## Revendications

1. Dispositif pour suspendre des roues ou des pneus, comprenant une plaque (3) fixée sur un mur et une barre de suspension (6, 22, 42) tubulaire attachée à cette plaque murale et soutenant au moins une roue, ainsi qu'un dispositif de verrouillage (15, 25) prévenant le vol ou les accidents, caractérisé en ce que la barre de suspension (6, 22, 42) est destinée à soutenir alternativement au moins une roue ou au moins un pneu, au moins une assise (23) arrondie étant enfichable sur la barre de suspension à cette fin et assurée contre un basculement, et en ce que la plaque murale (3) présente une retenue reliée à celle-ci et constituée d'un élément de retenue inférieur et supérieur (4, 5), en ce que la partie extrême de la barre de suspension (6, 22, 42) faisant face à ladite plaque murale présente une plaque de retenue (9, 40) qui coopère avec la retenue (4, 5) et qui est rigidement reliée à la plaque murale (3), en ce que l'autre partie extrême de cette barre de suspension est conformée en vue de recevoir une pièce de fermeture (16, 36) du dispositif de verrouillage, enfichable sur l'extrémité du tube et capable d'être verrouillée, et que cette pièce de fermeture comporte un chapeau (19, 32) en forme de couvercle, ladite extrémité du tube et la pièce de fermeture présentant des moyens de verrouillage (18, 31) concourants.

2. Dispositif selon la revendication 1, caractérisé en ce que la barre de suspension (6, 22, 42) forme une pièce séparée ayant différentes longueurs.

3. Dispositif selon la revendication 1, caractérisé en ce que la barre de suspension présente au moins deux parties (52, 42), une extrémité (51) de la première partie (52) étant reliée par l'intermédiaire de la plaque de retenue (40) à ladite retenue et l'autre extrémité étant reliée de manière amovible à une extrémité de la partie suivante ou de la dernière partie (42), et l'autre extrémité (44) de la partie suivante ou de la dernière partie (42) étant prévue pour recevoir une pièce de fermeture du dispositif de verrouillage (15, 25).

4. Dispositif selon la revendication 1, 2 ou 3, caractérisé en ce que ledit chapeau (32) peut être fixé à la plaque (9) de la barre de suspension au moyen d'un brin (35) formant une boucle.

5. Dispositif selon l'une quelconque des revendications 1 à 4, caractérisé en ce que la barre de suspension (6, 22) est rigidement reliée à la plaque de retenue (9).

6. Dispositif selon l'une quelconque des revendications 1 à 4, caractérisé en ce que la barre de soutien (42) est reliée à la plaque de retenue (40) de manière amovible.
